# EUROPEAN PATENT APPLICATION

(11) **EP 4 274 047 A1**
(43) Date of publication of application: **08.11.2023**
(21) Application number: 22171366.2
(22) Date of filing: 03.05.2022
(51) Int. Cl.: H02J 1/14

(54) **POWER DISTRIBUTION SYSTEM FOR A VEHICLE, SWITCHING UNIT FOR SUCH POWER DISTRIBUTION SYSTEM AND METHOD FOR CONTROLLING THE SAME**

(71) Applicant: KNORR-BREMSE Systeme für Nutzfahrzeuge GmbH, 80809 München (DE)
(72) Inventor: DERZSI, Andras, 2146 Mogyoród (HU); KISS, Dávid, 2066 Szár (HU); LINDNER, Peter, 2300 Ráckeve (HU)

(57) **Abstract**

The present invention relates to a power distribution system (1) for a vehicle, comprising:
at least one power source (20),
at least one consumer (30) connectable to the at least one power source (20) via a power supply line (22), and
a switching unit (10) arranged in the power supply line (22) between the at least one power source (20) and the at least one consumer (30) and configured to connect and/or disconnect the at least one consumer (30) to or from the power source (20), wherein
the switching unit (10) comprises a switch (11) configured to connect and/or disconnect the at least one consumer (30) to or from the power source (20) in accordance with at least one predetermined software limit and at least one hardware limit (18) of a set value and type.

## Description

The present invention relates to a power distribution system for a vehicle, a switching unit for such power distribution system, and a method for controlling the power distribution system and/or the switching unit. Further, the present invention relates to a vehicle comprising the power distribution system and/or the switching unit, and/or performing the method. The present invention also relates to a computer program product and a storage medium for performing or passing on the method.

Electric power distribution systems for vehicles are becoming more and more important to supply several consumers with a required amount of power to ensure operability. Specifically, the electrification in the automotive sector has triggered replacements of several vehicle components resulting in novel architectures. For example, many components of commercial vehicles used to rely on compressed air as energy source for control and actuation purposes. Due to the electrification, many of these pneumatic components are to be replaced by electrically powered components. In addition, automated driving applications set new requirements for the vehicle systems and, in particular, for safety relevant consumer units.

With respect to the electric power supply and for safety reasons, components of a respective power distribution system and components operatively coupled thereto have to be protected against overcurrent, overvoltage or any other failures due to electricity. Such protection may be implemented by a fuse. Such fuse is, for example, arranged in a power supply line between a power source and a consumer. In the event of an overcurrent, blowing of the fuse disconnects the consumer from the power source and therefore from any further power supply. However, blowing of the fuse requires a replacement by a new fuse. Accordingly, a respective replacement is time and cost consuming. In particular, the performance of such vehicle may be limited due to the disconnection until the replacement of the blown fuse, even if the power source returns to a normal operating state.

Furthermore, fuses used in conventional power distribution systems for the protection of consumers or other electric loads from overcurrent and the like have fix limit characteristics such as a fix current limit, above which the fuse will blow. Consequently, each application with respect to different limits to be applied requires an individually designed fuse. Additionally, any degradation of a component or other effect requiring another level of safety may result in replacements efforts with respect to the fuse.

In view of the above, it is an object of the present invention to provide a power distribution system for a vehicle allowing a protection of components with enhanced flexibility and/or a reduction in efforts and therefore less costs.

The object is solved by the subject matters of the independent claims. Advantageous modifications are subject to the dependent claims.

According to the present invention, a power distribution system for a vehicle comprises at least one power source, at least one consumer connectable to the at least one power source via a power supply line, and a switching unit. The switching unit is arranged in the power supply line between the at least one power source and the at least one consumer and configured to connect and/or disconnect the at least one consumer to or from the power source. The switching unit comprises a switch configured to connect and/or disconnect the at least one consumer to or from the power source in accordance with at least one predetermined software limit and at least one hardware limit, wherein the at least one hardware limit is different from the at least one software limit with respect to a set value and/or type of limit of a set value and type.

The at least one power source may be a battery, capacitors, such as supercapacitors, and/or an electric generator. Further, the power source may be a main power source or an auxiliary power source. In principle, the term "power source" may relate to any kind of source capable of providing electric power generated and/or energy stored therein to a consumer. Further, in principle, the term "consumer" may relate to any kind of device that requires and therefore consumes electric power for its intended operation. For example, the at least one consumer may be associated with a highly automated driving (HAD) system, a steering device or braking device.

To protect the consumer against any potential damage by the power source or any other component within the power supply line due to a malfunction, the switching unit is respectively arranged in the power supply line between the power source and the consumer. Accordingly, the switching unit is configured to open the switch to disconnect the consumer from the power source and to interrupt the power supply line, respectively, upon a detected malfunction. In turn, the power source may also be protected against any malfunction by the consumer. Furthermore, the power distribution system may be configured to connect or disconnect the consumer to or from the power source in other trigger events independent from a malfunction. For example, the power source may be an auxiliary power source to be connected to the consumer when a power supply by a main power source is no longer sufficient.

The power distribution system may also comprise several consumers and/or several power sources. For example, the switching unit may be arranged between several consumers and one power source to connect or disconnect all consumers to or from the common power source at once. In turn, the switching unit may be arranged between several power sources and one consumer to connect or disconnect all power sources to or from the common consumer at once. Alternatively or in addition, the several consumers and/or several power sources and/or respective groups thereof may each provide at least one switching unit in a respective power supply line assigned thereto to individually connect and disconnect each of the several consumers and/or several power sources and/or respective groups thereof to or from the respective supply line.

As a basic principle, the conventionally used fuse is replaced by the switching unit capable of repeatedly opening and closing the switch to connect and disconnect the consumer to and from the power source. Accordingly, any disconnection due to a malfunction or other trigger event may be reversed.

The switch of the switching unit may be a normally-open or normally-closed switch. A normally-open switch may reduce the risk of an unintended connection of the at least one consumer and the at least one power source. Vice versa, a normally-closed switch may reduce the risk of an unintended disconnection of the at least one consumer and the at least one power source.

The switching unit is configured to open and close the switch in accordance with two limits, i.e. the at least one predetermined software limit and the at least one predetermined hardware limit. The at least one predetermined software limit relates to a limit that is set and controlled by software with respective degrees of freedom. Instead, the hardware limit is bound to hardware components of the switching unit. In other words, the at least one hardware limit is not monitored but causes the switch to open in response of hardware components affected when the set hardware limit is exceeded, i.e. without approval from any approval implemented by software. The hardware limit may therefore allow faster reaction times to switch the switch as a respective signal does not have to be processed by software.

The set value and the type of software limit may correspond to a limit to protect the at least one consumer against electrical damage and/or connect and disconnect to and from the at least one power source due to another trigger event. Furthermore, the at least one software limit may be combined with a time condition. For example, exceeding the at least one software limit may not cause the switching unit to disconnect the at least one consumer from the at least one power source, as long as the at least one software limit is not exceeding over a predetermined period of time. Such time condition may be combined with several software limits, e.g. to reduce the reaction time the more critical the respective software limit is. Alternatively in addition, a value of a software limit may be combined with other applicable conditions such as a driving mode or a current speed and associated risks. However, the at least one software limit may also correspond to a limit to protect another component of the power distribution system, which may be protected by opening the switch.

In some embodiments, the at least one hardware limit is different from the at least one software limit with respect to the set value and/or type of limit.

For example, the at least one hardware limit may be of the same type as the at least one software limit but provides switching of the switch at another set value. Further, the at least one hardware limit may be of a different type as the at least one software limit. Accordingly, the at least one hardware limit and the at least one software limit may be directed to different failure or trigger events. As a software limit may allow a higher flexibility, which may become complex if it were to be implemented by a hardware limit, the at least one software limit may be directed to the protection of the at least one consumer. In turn, the at least one hardware limit with faster reaction times may be directed to critical limits requiring immediate reaction upon failure. Alternatively, or in addition, the at least one hardware limit and the at least one software limit may be directed to the same type and value of limit for redundancy reasons and/or plausibility checks.

In some embodiments, a type of the hardware limit and/or the software limit comprises at least one of a voltage, a voltage difference, a current, a resistance, an actuation time and a temperature.

Accordingly, the at least one hardware limit and the at least one software limit may be representative of an overvoltage, overcurrent, undercurrent, a level of degradation and/ or the like. The at least one hardware limit and the at least one software limit may be different as per the above but may also be at least partially the same in other embodiments, for example, for redundancy reasons.

In some embodiments and/ or in combination with any of the foregoing and following embodiments, an upper hardware limit is set higher than an upper software limit representative of the same type of limit and/or a lower hardware limit is lower than a lower software limit representative of the same type of limit.

For example, the upper hardware limit may be a hardware upper current limit higher than a software upper current limit. The software upper current limit may be intended to protect the at least one consumer against an overcurrent. The software upper current limit may be combined with a time condition to allow the software upper current value to be exceeded over a predetermined period of time. Thus, short minor current variations may be acceptable to avoid a frequent switching. However, at some level an overcurrent may cause severe damage even if only for a short period of time. Accordingly, the hardware upper current limit provides a protection in such event. Alternatively, the hardware upper limit may be directed to the tolerance level of the switching unit, while the software upper limit may be directed to the tolerance level of the at least one consumer. Consequently, the software upper limit may be set to the tolerance level of the at least one consumer, while the switching unit usable for different consumers may be always protected by the hardware upper limit.

The current limits, irrespective of being a hardware current limit or a software current limit may be set in dependence on the current direction, i.e. in dependence on the direction of the current flow. For example, one current direction relates to the power supply from the at least one power source to the at least one consumer, while the opposite current direction relates to the power supply from the at least one consumer to the at least one power source during regenerative braking. Hence, the hardware current limit and/or a software current limit may be set differently as the charging and discharging limits, each being represented by a respective current direction, may be different.

In some embodiments, the power distribution system further comprises a control unit comprised by the switching unit or operatively coupled thereto and configured to set the at least one software limit.

Accordingly, the at least one software limit may be adaptable by the control unit. The control unit may comprise an input device to allow an operator to set or adapt the at least one software limit and/or time conditions and/or other trigger events. Alternatively or in addition, the control unit may automatically adapt the at least one software limit and/or time conditions and/or other trigger events, for example, in accordance with a driving mode, instantaneous speed, road conditions and/or other aspects relevant for the switching level of the switching unit. The control unit may also be controlled by an external control device to provide such adaptions.

The control unit may be comprised by the switching unit. However, the control unit may also be separate from the switching unit to reduce complexity of the switching unit. In such event, the switching unit comprises at least one signal input to receive respective control signals by the control unit.

In some embodiments, the power distribution system further comprises at least one comparator configured to control the switch in accordance with an instantaneous signal of the type of limit and the respective hardware limit as input of the comparator.

The comparator is one example of implementing the switching of the switch by the at least one hardware limit. The comparator may comprise two inputs to be compared to provide the switching unit with a respective signal as an output to switch the switch in accordance with result of such comparison. One input of the comparator is the at least one hardware limit, such as the hardware upper current limit, and the other input is the respective instantaneous signal of such type of limit. The instantaneous signal may be detected as representative value of the type of limit by at least one measurement unit. Alternatively or in addition, the instantaneous signal may be derived from the control unit or another control device in accordance with applicable boundary conditions.

At least one comparator may be used for each type of hardware limit. Further, at least one comparator may be used for each direction of current.

In some embodiments, the power distribution system comprises a voltage divider representative of the at least one hardware limit.

The voltage divider is an example of setting the at least one hardware limit as input for the comparator. For example, by using different voltage dividers different hardware current limits may be set for the switching device. With respect to hardware current limits, two voltage dividers may be used for each of the current directions.

As an exemplary embodiment, an overcurrent protection by set hardware current limits may be implemented by a measuring member such as a shunt resistor and an operational amplifier in both directions. The working principle is based on the Ohm law, wherein the current running through the resistor is causing a voltage difference that is multiplied with the operational amplifier. Subsequently, the measured voltage representative of the instantaneous current is compared by the comparator with the respective hardware limit. Here, the hardware limit as input for the comparator is a value set by the voltage divider representative of the hardware current limit, e.g. a maximum limit, of the switching unit. When the instantaneous voltage and therefore the instantaneous current reaches the hardware limit, the switching unit is activated to open the switch and the current flow may be terminated within less than 10 ps. After the switching has been activated to open the switch, the switch may remain open until the overcurrent event has been acknowledged by the control unit or another control unit.

In some embodiments, the control unit as described above or another control unit is operatively coupled to the comparator and configured to set the at least one hardware limit as input for the comparator.

Accordingly, the at least one voltage divider may be replaced by a control input of a control unit. With respect to the control unit as described above, the control unit may therefore be configured to set and/or adapt the at least one hardware limit as well as the at least one software limit. However, the voltage divider may still be provided in parallel to provide both, a setting of the hardware limit by hardware means as well as by a control input.

A comparator member may also be used for status measurements of the switch to decide whether the switch is open or closed. For example, if the output of the comparator is high, the switch is open. In turn, if the output of the comparator is low, the switch is closed.

In some embodiments, the power distribution system further comprises an auxiliary power source configured to apply a voltage difference to the switching unit, preferably to an operational amplifier of the switching unit, to simulate a current flow.

The auxiliary power source may be used to test the switching unit and or measurement circuit in advance by simulating a current flow based on applying a voltage difference to the switching unit. Thus, it may not be required to pass a current up to critical limits through the switching unit or the overall power distribution system, which may cause damage when the switching unit is not operating properly. Preferably, the voltage difference is applied to the inputs of the operational amplifier. In particular, the auxiliary power source may only need to provide a few milliamperes during the simulation for a respective voltage difference. Furthermore, not only the hard ware limits may be checked but also the current measurement. This may also apply for the software limits.

The auxiliary power source may configured to continuously apply the voltage difference to the switching unit or the operational amplifier, respectively. In such configuration, the power distribution system, the auxiliary power source, the switching unit and/or the operational amplifier may comprise an auxiliary power source switch to connect and disconnect the auxiliary power source to and from the switching unit or operational amplifier, respectively. Accordingly, the auxiliary power source switch is open if no testing is performed. Alternatively or in addition, the auxiliary power source to provide the voltage difference only on demand.

The simulation or emulation, respectively, of a current flow by the auxiliary power source is an inventive concept provided by the present invention independent of the concrete design of the power distribution system.

In some embodiments, at least one discharge device is connected in parallel to the at least one consumer.

The at least one discharge device may act as an artificial consumer or load to discharge the at least one consumer when not supplied with power by the power source. Particularly, the at least one discharge device may remove residual charges stored in the input capacitors of the at least one consumer. Consequently, this may reduce the switch off time and unwanted charging up of the capacitors.

The at least one discharge device may be a resistor, a semiconductor and/or a semiconductor-based discharge device. In the event of a continuously discharging discharge device, such as a resistor, the discharge device may be connectable and disconnectable to the at least one consumer by a discharge device switch. Accordingly, the discharge device switch is disposed in the parallel connection, for example, upstream or downstream of the discharge device. Specifically, the operation of the discharge device switch may at least be dependent on the switching state of the switch of the switching unit. For example, when the switch of the switching unit is closed, the discharge device switch may be opened to reduce any discharge losses. In turn, if the switch of the switching unit is open, the discharge device switch may be closed to remove residual charges. However, if the discharge operation of the discharge device is controlled otherwise to discharge the consumer only on demand, the discharge device switch may not necessarily be required. Still, the discharge device switch may provide a further safety level or redundancy.

In some embodiments, the power distribution system further comprises a monitoring unit configured to provide a signal representative of a resistance of the switch and/or the power supply line or at least a portion thereof operatively coupled to the switch.

For example, a voltage across the switch may be measured. The measured voltage may be further amplified by an operational amplifier such as the operational amplifier previously described. The resistance of the switch may then be estimated based on the measured voltage and a current measured, for example, as previously described with respect to the instantaneous current to be compared by the comparator. Based on the estimated resistance an instantaneous temperature of the switch may be estimated to predict a failure of the switch in advance, since the resistance of the switch increases over the lifetime. Alternatively or in addition, the instantaneous temperature as measured by a respective temperature measurement capability of the switch, switching unit and/or a separate detection unit may be monitored with respect to a predetermined temperature threshold to control the switch.

The monitoring of the degradation of the switch is an inventive concept provided by the present invention independent of the concrete design of the power distribution system.

According to another aspect, the present invention relates to a switching unit for a power distribution system as described above, wherein the switching unit comprises at least one voltage measurement unit and/or at least one current measurement unit.

The at least one voltage measurement unit/or and the at least one current measurement unit are configured to provide a respective signal representative of an instantaneous voltage, voltage difference and/or current to the control unit as described above and/or another unit to control the switch accordingly.

The switching unit may comprise two voltage measurements units, one of each side of the switch. The at least one current measurement unit may be particularly arranged between the switch and the at least one consumer.

For example, the two voltage measurement units may be used to activate the switch to be opened in the event of an under voltage and/or overvoltage. Further, the two voltage measurement units may be used to determine a voltage difference between the two respective voltage measurements to determine the state of the switch as being open or closed.

In some embodiments, the switching unit further comprises the control unit as described above and/or another control unit, preferably a microprocessor, configured to set the software limit.

The at least one software limit may thereby be set by the switching unit in response to a presetting but may also be adaptable with respect to different configurations and conditions.

In some embodiments, the control unit and/or the other control unit are/is configured to set the hardware limit.

Alternatively or in addition to the above, the at least one hardware limit may thereby be set by the switching unit in response to a presetting but may also be adaptable with respect to different configurations and conditions.

In some embodiments, the switching unit further comprises the auxiliary power source as described above.

Accordingly, the switching unit may provide a self-testing capability with respect to the overall functionality and respective measurements.

In some embodiments, the switching unit further comprises the monitoring unit as described above.

The monitoring unit allows the switching unit to estimate a degradation state of the switch. Accordingly, the switching unit comprises the control unit as previously described or another control unit to process the signals received by the monitoring device. However, the signals by the monitoring device may be alternatively or in addition provided to a control unit separate from the switching unit.

According to another aspect, the present invention relates to a method for controlling a power distribution system as described above and/or a switching unit as described above, comprising the following steps:
setting at least one software limit and at least one hardware limit for the switching unit, and
controlling the switching unit to open when one of the at least one software limit and/or hardware limit is reached.

Specifically, the method may allow to set different software limits for different consumers within one power distribution system and/or for consumers to be varied within a power distribution system configuration. Accordingly, the software limits may be flexibly adapted to different requirements. However, the switching unit as such may provide a given configuration with set hardware limits to provide a further safety level independent from the consumer safety levels set by the software limits. Alternatively or in addition, the hardware limits may allow to set up a secondary safety level for consumers in the event of short-term excessive electric peaks.

In principle, any method features or device features representative of method steps as described with respect to power distribution system and the switching unit also relate to further embodiments of the method and therefore are applicable thereto.

According to another aspect, the present invention relates to a vehicle, comprising a power distribution system as described above and/or a switching unit as described above, or wherein the vehicle is configured to perform the method as described above.

The power distribution system and the switching unit, respectively, may be provided in a power distribution architecture for the vehicle to protect the switching unit as such by the at least one hardware limit and the at least one consumer against damages or malfunctions due with respect to the at least one software limit, e.g. against an overcurrent or overvoltage. Alternatively or in addition, the power distribution system and switching unit, respectively, may be configured to disconnect the at least one power source from the at least one consumer as per other trigger events. For example, an undercurrent may be detected as the at least one software limit indicative of a battery as power source running low. The at least one consumer may then be connected to another power source. If the battery is recharged, the switching unit may reconnect the battery to the at least one consumer. The recharge of the battery may be provided by a respective signal to the switching device by a separate control device or may be detected by the switching unit comprising at least one respective measurement unit.

The vehicle preferably comprise individual features listed in the above description of the power distribution system, the switching unit and/or the method.

According to another aspect, the present invention relates to a computer program product having code means, which, when being executed on a data processing unit, cause it to execute the method as described above.

The data processing unit is preferably a data processing unit provided in the above-described power distribution system, the switching unit or the vehicle, such as the control unit or another control unit. Thus, also an existing device may be adapted to perform the method described above.

According to another aspect, the present invention relates to a storage medium for being read by a data processing unit, wherein the storage medium comprises a computer program product as described above.

Thereby, the present invention may be passed on. The storage medium preferably comprises an USB stick, a memory card and/or a CD-ROM.

The following is a description of preferred embodiments of the invention with reference to the accompanying drawings.

In detail:
Fig. 1 is a schematic illustration of a power distribution system according to an exemplary embodiment of the present invention;
Fig. 2 is a schematic illustration of a comparator applicable to the power distribution system in Fig. 1; and
Fig. 3 is a schematic illustration of an auxiliary power source and an operational amplifier to simulate a current flow applicable to the power distribution system in Fig. 1.

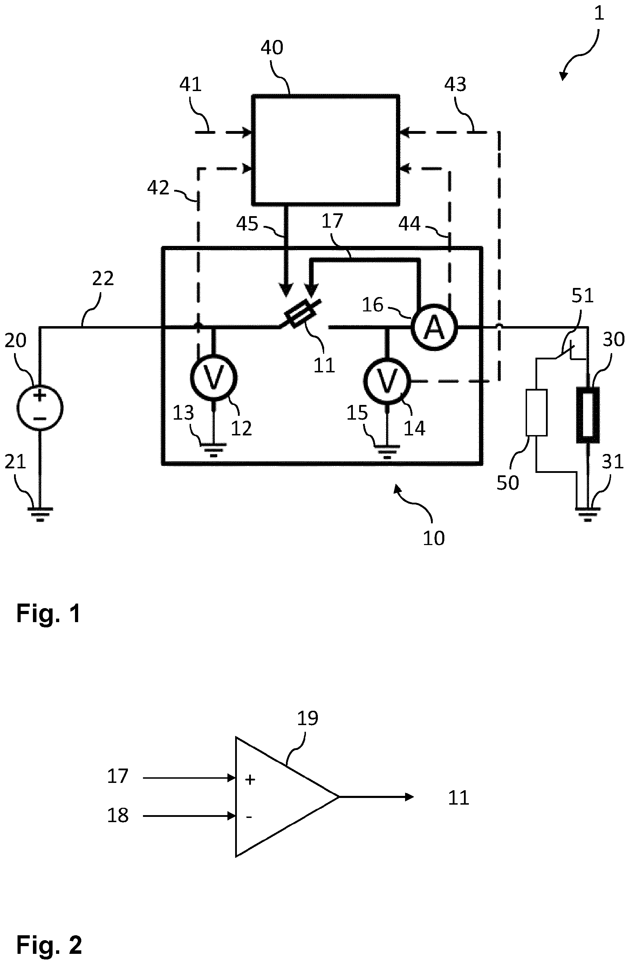

**Fig.** 1 is a schematic illustration of a power distribution system 1 according to an exemplary embodiment of the present invention. The power distribution system 1 comprises a power source 20 grounded by ground 21 and a consumer 30 grounded by ground 31. The power source 20 is configured to supply electric power to the consumer 30 via a power supply line 22. The power distribution system 1 further comprises a switching unit 10 disposed in the power supply line 22 to connect and disconnect the consumer 30 to and from the power source 20.

In the exemplary embodiment, the switching unit 10 comprises a switch 11 to be opened or closed to connect and disconnect the consumer 30 to and from the power source 20. The switching unit 10 further comprises two voltage measurement units 12, 14, each of which being ground by a respective ground 13, 15. However, in alternative embodiments, the power distribution system may comprise a common ground instead of separate grounds. Accordingly, any ground 13, 15, 21, 31 shown in the present embodiment may be alternatively provided by a common ground for all components or at least groups of components to be grounded. In a direction from the power source 20 to the consumer 30, one voltage measurement unit 12 is connected to the power supply line 22 upstream of the switch 11, and the other voltage measurement unit 14 is connected to the power supply line 22 downstream of the switch 11. In the same direction, the switching unit 10 comprises a current measurement unit 16 downstream of the switch, in the given exemplary embodiment downstream of the other voltage measurement unit 14.

The voltage measurement units 12, 14 provide a signal representative of the respective instantaneous voltage to a control unit 40 to control the switch 11 in dependence of set software limits. Specifically, the one voltage measurement unit 12 provides such signal via an upstream voltage signal line 42, and the other voltage measurement unit 14 provides such signal via a downstream voltage signal line 43. In the exemplary embodiment, the control unit 40 is separate from the switching unit 10. However, in other embodiments, the control unit 40 may be also comprised by the switching unit 10. Similarly, the current measurement unit 16 provides a signal representative of the instantaneous current via a current signal line 44 to the control unit 40. However, a signal representative of the instantaneous current is also forwarded from the current measurement unit 16 via a switching line 17 of the switching unit 10 to control the switch 11 as per a set hardware current limit 18 (Fig. 2).

According to the above, the switch 11 is controlled in accordance with set software limits by the control unit 40 and the set hardware limit 18 by the switching unit. In the control unit 40 the software limits are a software voltage limit and a software current limit representative of an overvoltage and overcurrent, respectively, to protect the consumer against a respective damage. The setting of the software limits is executed via a command signal line 41, which is also capable of transmitting other control commands next to setting commands. The control commands may for example comprise the opening or closing of the switch 11 for other reasons than due to software limits. The control device is configured to compare the received voltage and current signals with the set software voltage limit and the set software current limit. Further, the control unit 40 is configured to consider a time condition in the event of the software voltage limit or the software current level is exceeded by one of the respectively received signals by the voltage measurement units 12, 14 and the current measurement unit 16. For example, a signal to open the switch 11 in response to an overcurrent to be transmitted via a switching line 45 of the control unit 40 is only transmitted after the instantaneous current exceeding the software current limit is detected over a predetermined period of time. Accordingly, short tolerable peaks in voltage and current may be acceptable to avoid a frequent switching. However, in other embodiments, a time condition may not be applied to the software current limit and/or the software voltage limit. The control device is further configured to transmit a signal to the switching unit 10 to reopen the switch 11 after the instantaneous current signal and voltage signal fall again below the respective software limits, which may be also linked to a time condition.

As the switching unit 10 and the switch 11, respectively, may provide a sensitivity to electric current different from the consumer 30 or should be independent thereof, the switching unit 10 as such also controls the switch 11 in accordance with the hardware limit 18. Further, the control in accordance with the hardware limit allows the switch 11 to be opened immediately after a critical overload occurs with any further time conditions or the like. The hardware limit is also capable of protecting at least the switching unit, if the control unit 40 fails.

Accordingly, the hardware limit 18 in the exemplary embodiment is set as a hardware current limit higher than the software current limit. The hardware limit 18 corresponds to the maximum current tolerable by the switching unit 10 and the switch 11, respectively. However, in other embodiments, the hardware limit 18 may be set to a maximum limit of a singular event tolerable by the consumer 30. Alternatively, the hardware limit may be set to one of such maximum limit of the switching unit 10 or the consumer 30, whichever is lower.

The power distribution system 1 further comprises a discharge device 50 connected in parallel to the consumer 30. Consequently, the discharge device 50 is connected to the power supply line 22 between the switching unit 10 and the consumer 30 and to the ground 31. The discharge device 50 is configured to remove residual charges stored in the input capacitors of the consumer 30 when the consumer 30 is not supplied with electric power from the power source 20. Thus, a faster switch off of the consumer may be achieved and an unwanted charging up of the capacitors may be prevented.

In the present embodiment, the discharge device 50 is a resistor. Since the discharge device 50 discharges the consumer 30, a discharge device switch 51 is arranged upstream of the discharge device to connect and disconnect the discharge device to and from the consumer 30. Accordingly, if the switch 11 of the switching unit 10 is closed, the discharge device switch 51 is open to disconnect the discharge device from the consumer 30. In turn, if the switch 11 is opened, the discharge device switch 51 is closed to connect the discharge device 50 to the consumer 30 for a respective discharge of residual charges. In alternative embodiments, the discharge device 50 may be semi-conductor or a semiconductor-based discharge device, which may not require the discharge device switch 51.

**Fig. 2** is a schematic illustration of a comparator 19 applicable to the power distribution system 1 in Fig. 1 to control the switch 11 of the switching unit 10 in accordance with the set hardware limit 18. The comparator 19 is an exemplary hardware component to directly control the switch 11 depending on the instantaneous current signal provided via the switching line 17 of the switching unit 10. Accordingly, the instantaneous current signal corresponds to one input of the comparator 19, while the set hardware limit 18 corresponds to the other input of the comparator 19. The comparator 19 compares the instantaneous current signal received via the switching line 17 with the set hardware limit 18 and sends a respective output to the switch 11. In other words, the output of the comparator 19 does not initiate an opening of the switch 11 as long as the instantaneous current signal does not exceed the set hardware limit 18. The hardware limit 18 is set by a voltage divider (not shown). The hardware limit 18 is adaptable by using different dividers. However, in other embodiments, the hardware limit 18 may be set by a control unit of the switching unit 10, such as a microprocessor, connected to the input of the comparator 19 for the hardware limit 18. Accordingly, the hardware limit 18 may also be adaptable via such control unit.

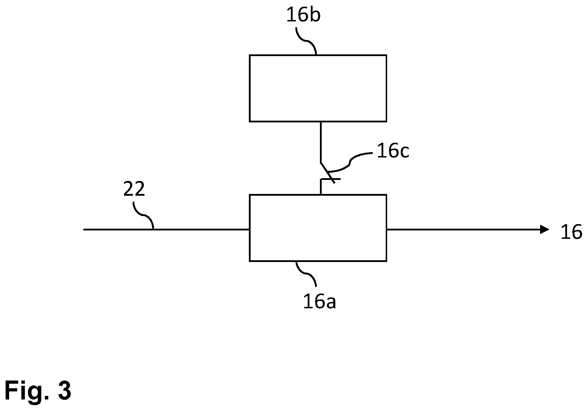

**Fig. 3** is a schematic illustration of an auxiliary power source 16b and an operational amplifier 16a to simulate a current flow applicable to the power distribution system 1 in Fig. 1. The auxiliary power source 16b allows the switching unit 10 and the current measurement unit 16, respectively, to be tested before operation of the switching unit 10. The auxiliary power source 16b is an auxiliary power source in terms of supporting such simulation instead of being a secondary power source for the consumer 30. The auxiliary power source is comprised by the switching unit 10 to provide respective self-testing capabilities. However, in other embodiments, an external auxiliary power source may be used.

The auxiliary power source 16b applies a voltage difference to the operational amplifier 16a corresponding to a predetermined current flow. The operational amplifier 16a transmits the respectively amplified signal to the current measurement unit 16. For example, the voltage difference applied to the operational amplifier 16a corresponds to the set hardware limit 18. If the corresponding signal sent by the current measurement unit 16 does not initiate an opening of the switch 11, the current measurement unit 16 or any of the other hardware components for opening the switch 11 may be defective. Irrespective of the type of failure, the switching unit 10 is protected by the self-testing capability against any damage due to a malfunction of the switching unit 10 before a concrete operation as the potentially destructive current is simulated but not physically applied.

In the present embodiment, the auxiliary power source 16b is configured to continuously apply the voltage difference corresponding to the predetermined current flow for the above simulation. Accordingly, an auxiliary power source switch 16c is disposed between the auxiliary power source 16b and the operational amplifier 16a to disconnect the auxiliary power source 16b from the operational amplifier 16a, if no simulation or testing is to be executed. However, in alternative embodiments, the auxiliary power source 16b may alternatively or in addition be configured to apply the voltage difference only on demand.

The invention is not limited to the embodiments described above. Rather, by combining, omitting and/or exchanging individual features, further subject matters may be formed, which also fall within the claimed scope of protection.

### LIST OF REFERENCE SIGNS

- 1: power distribution system
- 10: switching unit
- 11: switch
- 12: upstream voltage measurement unit
- 13: ground (upstream voltage measurement unit)
- 14: downstream voltage measurement unit
- 15: ground (downstream voltage measurement unit)
- 16: current measurement unit
- 16a: amplifier
- 16b: auxiliary power source
- 16c: auxiliary power source switch
- 17: switching line (switching unit)
- 18: hardware limit
- 19: comparator
- 20: power source
- 21: ground (power source)
- 22: power supply line
- 30: consumer
- 31: ground (consumer)
- 40: control unit
- 41: command signal line
- 42: upstream voltage signal line
- 43: downstream voltage signal line
- 44: current signal line
- 45: switching line (control unit)
- 50: discharge device
- 51: discharge device switch

## Claims

1. Power distribution system (1) for a vehicle, comprising:
at least one power source (20),
at least one consumer (30) connectable to the at least one power source (20) via a power supply line (22), and
a switching unit (10) arranged in the power supply line (22) between the at least one power source (20) and the at least one consumer (30) and configured to connect and/or disconnect the at least one consumer (30) to or from the power source (20), wherein
the switching unit (10) comprises a switch (11) configured to connect and/or disconnect the at least one consumer (30) to or from the power source (20) in accordance with at least one predetermined software limit and at least one hardware limit (18) of a set value and type.

2. The power distribution system (1) according to claim 1, wherein
the at least one hardware limit (18) is different from the at least one software limit with respect to the set value and/or type of limit, wherein
preferably an upper hardware limit is set higher than an upper software limit representative of the same type of limit and/or a lower hardware limit is lower than a lower software limit representative of the same type of limit, and wherein
preferably the type of the hardware limit (18) and/or the software limit comprises at least one of a voltage, a voltage difference, a current, a resistance, an actuation time and a temperature.

3. The power distribution system (1) according to claim 1 or 2, wherein
the power distribution system (1) further comprises a control unit (40) comprised by the switching unit (10) or operatively coupled thereto and configured to set the at least one software limit.

4. The power distribution system (1) according to any one of the preceding claims, wherein
the power distribution system (1) further comprises at least one comparator (19) configured to control the switch (11) in accordance with an instantaneous signal of the type of limit and the respective hardware limit (18) as input of the comparator (19), wherein
the power distribution system (1) preferably comprises a voltage divider representative of the at least one hardware limit (18), and/or wherein
the control unit (40) according to claim 3 or another control unit is operatively coupled to the comparator (19) and configured to set the at least one hardware limit (18) as input for the comparator (19).

5. The power distribution system (1) according to any of the preceding claims, wherein
the power distribution system (1) further comprises an auxiliary power source (16b) configured to apply a voltage difference to the switching unit (10), preferably to an operational amplifier (16a) of the switching unit (10), to simulate a current flow.

6. The power distribution system (1) according to any one of the preceding claims, wherein
at least one discharge device (50) connected in parallel to the at least one consumer (30).

7. The power distribution system (1) according to any one of the preceding claims, wherein
the power distribution system (1) further comprises a monitoring unit configured to provide a signal representative of a resistance of the switch (11) and/or the power supply line (22) or at least a portion thereof operatively coupled to the switch (11).

8. Switching unit (10) for a power distribution system (1) according to any one of the claims 1 to 7, wherein
the switching unit (10) comprises at least one voltage measurement unit (12, 14) and/or at least one current measurement unit (16).

9. The switching unit (10) according to claim 8, wherein
the switching unit (10) further comprises the control unit (40) according to claim 2 and/or another control unit, preferably a microprocessor, configured to set the software limit, wherein
the control unit (40) and/or the other control unit are/is preferably configured to set the hardware limit.

10. The switching unit (10) according to claim 8 or 9, wherein
the switching unit (10) further comprises the auxiliary power source (16b) according to claim 5.

11. The switching unit (10) according to any one of the claims 8 to 10, wherein
the switching unit (10) further comprises the monitoring unit according to claim 7.

12. Method for controlling a power distribution system (1) according to anyone of the claims 1 to 7 and/or a switching unit (10) according to any one of the claims 8 to 11, comprising the following steps:
setting at least one software limit and at least one hardware limit for the switching unit (10), and
controlling the switching unit (10) to open when one of the at least one software limit and/or hardware limit is reached.

13. Vehicle, comprising a power distribution system (1) according to anyone of the claims 1 to 7 and/or a switching unit according to any one of the claims 8 to 11, or wherein the vehicle is configured to perform the method according to claim 12.

14. Computer program product having code means, which, when being executed on a data processing unit, cause it to execute the method according to claim 12.

15. Storage medium for being read by a data processing unit, wherein the storage medium comprises a computer program product according to claim 14.
